# EUROPÄISCHE PATENTANMELDUNG

(11) **EP 3 581 756 A1**
(43) Veröffentlichungstag der Anmeldung: **18.12.2019**
(21) Anmeldenummer: 18176911.8
(22) Anmeldetag: 11.06.2018
(51) Int. Cl.: E21B 10/44, E21B 17/22, E02D 5/80

(54) **BOHRVORRICHTUNG**

(71) Anmelder: HILTI Aktiengesellschaft, 9494 Schaan (LI)
(72) Erfinder: Foser, Roland, 9491 Ruggell (LI); Pallmer, Pierre, 86859 Igling (DE); Kondratiuk, Jens, 9470 Buchs (CH)
(74) Vertreter: Hilti Aktiengesellschaft Corporate Intellectual Property

(57) **Zusammenfassung**

Die erfindungsgemäße Bohrvorrichtung umfasst einen Bohrergrundkörper und eine schraubenförmig um den Bohrergrundkörper umlaufende Förderwendel, wobei die Förderwendel in eine Vielzahl nebeneinander angeordneter Förderwendelsegmente unterteilt ist.

## Beschreibung

### GEBIET DER ERFINDUNG

Die vorliegende Erfindung betrifft eine Bohrvorrichtung, insbesondere einen Glockenbohrer.

Sogenannte Glockenbohrer können einen Bohrergrundkörper mit einem Bohrkopf und eine um einen Schaft des Bohrergrundkörpers umlaufende Stahlförderwendel umfassen. Die Stahlförderwendel kann auf den Bohrergrundkörper aufgesteckt und fest oder lösbar mit diesem verbunden sein. Mit Hilfe der Stahlförderwendel kann Bohrklein, beispielsweise Gesteinsmehl, von dem Bohrkopf wegtransportiert werden.

Die DE 34 05 070 A1 zeigt einen Gesteinsbohrer mit einem Bohrkopf mit angeformtem Schaft. Der Schaft ist vom Bohrkopf her über einen Großteil seiner Länge von einem Rohr in radialem Abstand umgeben, das eine außenseitig auf diesem sitzende Förderwendel trägt.

Die EP 0 201 724 A2 zeigt eine Austausch-Förderwendel, die für Gesteinsbohrer zur Förderung von Bohrklein dient. Zur Herstellung der Austausch-Förderwendel wird ein T-Profilstrahl verwendet, dessen wendelförmig aufgewickelter Quersteg das Mantelrohr und dessen senkrechter Steg die Transportschulter bildet.

Eine Aufgabe der vorliegenden Erfindung ist es, eine verbesserte Bohrvorrichtung bereitzustellen.

### OFFENBARUNG DER ERFINDUNG

Demgemäß wird eine Bohrvorrichtung, insbesondere ein Glockenbohrer, vorgeschlagen. Die Bohrvorrichtung umfasst einen Bohrergrundkörper und eine schraubenförmig um den Bohrergrundkörper umlaufende Förderwendel, wobei die Förderwendel in eine Vielzahl nebeneinander angeordneter Förderwendelsegmente unterteilt ist.

Dadurch, dass die Förderwendel in die Förderwendelsegmente unterteilt ist, ist ein einfacher und schneller Austausch einzelner Förderwendelsegmente, beispielsweise aufgrund von Verschleiß, ohne einen kostenintensiven Gesamtaustausch der Förderwendel möglich. Des Weiteren ist eine einfache und schnelle Montage und Demontage der Bohrvorrichtung möglich.

Die Bohrvorrichtung ist insbesondere zur Verwendung mit einer Handwerkzeugmaschine geeignet. Die Handwerkzeugmaschine kann beispielsweise eine Bohrmaschine, eine Schlagbohrmaschine, ein Bohrhammer, ein Akkuschrauber, ein Meißelhammer oder dergleichen sein. Vorzugsweise umfasst die Handwerkzeugmaschine einen Motor zum Versetzen der Bohrvorrichtung in Rotation. Vorzugsweise umfasst die Handwerkzeugmaschine weiterhin eine Befestigungsvorrichtung, die dazu eingerichtet ist, die Bohrvorrichtung an der Handwerkzeugmaschine zu befestigen. Die Befestigungsvorrichtung ist beispielsweise ein Bohrfutter.

Die Bohrvorrichtung ist bevorzugt ein Glockenbohrer, ein Hammerbohrer, ein Gesteinsbohrer oder dergleichen oder kann als solcher bezeichnet werden. Der Bohrergrundkörper kann auch als Bohrerrohling bezeichnet werden. Der Bohrergrundkörper umfasst bevorzugt einen Bohrkopf mit Schneidkörpern und einem Zentrierbohrer sowie ein Einsteckende, mit dessen Hilfe die Bohrvorrichtung mit der Handwerkzeugmaschine koppelbar ist. Zwischen dem Einsteckende und dem Bohrkopf ist ein Schaft vorgesehen, auf den die Förderwendelsegmente insbesondere aufgefädelt sind. Die Förderwendel kann auch als Förderschraube, Förderhelix oder Förderspirale bezeichnet werden. Die Förderwendel kann ferner auch lediglich als Wendel, Schraube, Helix oder Spirale bezeichnet werden. Der Begriff "schraubenförmig" kann auch durch den Begriff "helixförmig" oder "spiralförmig" ersetzt werden.

Darunter, dass die Förderwendel in die Förderwendelsegmente "unterteilt" ist, ist zu verstehen, dass die Förderwendelsegmente voneinander getrennte und nicht miteinander verbundene Bauteile sind. Das heißt, die Förderwendelsegmente können einzeln oder auch zusammen ausgetauscht werden. Dabei kann eine Abfolge der Förderwendelsegmente auf dem Bohrergrundkörper verändert werden. Darunter, dass die Förderwendelsegmente "nebeneinander" angeordnet sind, ist zu verstehen, dass die Förderwendelsegmente in einer Längsrichtung der Bohrvorrichtung betrachtet so angeordnet sind, dass zumindest zwei Förderwendelsegmente nebeneinander oder benachbart positioniert sind. Die Anzahl der Förderwendelsegmente ist jedoch beliebig. Bevorzugt sind jedoch zumindest zwei derartige Förderwendelsegmente vorgesehen. Es können jedoch auch drei, vier, fünf, sechs, sieben oder mehr Förderwendelsegmente vorgesehen sein.

Gemäß einer Ausführungsform sind die Förderwendelsegmente lose nebeneinander angeordnet.

Insbesondere sind die Förderwendelsegmente nicht miteinander verbunden. Bevorzugt sind die Förderwendelsegmente daher verbindungsfrei oder verbindungslos nebeneinander angeordnet. Das heißt, die Förderwendelsegmente können werkzeugfrei voneinander getrennt werden.

Gemäß einer weiteren Ausführungsform ist die Förderwendel aus einem Kunststoffmaterial gefertigt.

Die Förderwendel kann auch als Kunststoffförderwendel bezeichnet werden. Insbesondere sind die einzelnen Förderwendelsegmente aus einem Kunststoffmaterial gefertigt. Dementsprechend können die Förderwendelsegmente als Kunststoffförderwendelsegmente bezeichnet werden. Beispielsweise können die Förderwendelsegmente kostengünstige Kunststoffspritzgussbauteile sein. Das Kunststoffmaterial kann beispielsweise Polypropylen (PP), Polyethylen (PE), Polytetrafluorethylen (PTFE) oder ein anderes geeignetes Kunststoffmaterial sein. Bevorzugt ist das Kunststoffmaterial ein Thermoplast. Dadurch, dass die Förderwendel beziehungsweise die Förderwendelsegmente bevorzugt aus einem Kunststoffmaterial gefertigt sind, kann im Vergleich zu einer Bohrvorrichtung mit einer Förderwendel aus einem Metallwerkstoff eine signifikante Reduzierung der Lärmbelastung erreicht werden. Des Weiteren kann aufgrund der Verwendung des Kunststoffmaterials eine deutliche Gewichtsreduktion der Bohrvorrichtung im Vergleich zu einer wie zuvor erwähnten Bohrvorrichtung mit einer metallischen Förderwendel erzielt werden. Ferner wird eine Erwärmung des Einsteckendes aufgrund der im Vergleich zu einem Metall reduzierten Wärmeleitfähigkeit des Kunststoffmaterials reduziert. Dies verbessert die Handhabbarkeit der Bohrvorrichtung. Alternativ kann die Förderwendel auch aus einem anderen geeigneten Material, wie beispielsweise aus einem Verbundwerkstoff, gefertigt sein. Auch kann die Förderwendel einen Metallwerkstoff und/oder einen Keramikwerkstoff aufweisen oder aus einem derartigen gefertigt sein.

Gemäß einer weiteren Ausführungsform sind die Förderwendelsegmente formschlüssig mit dem Bohrergrundkörper verbunden.

Insbesondere sind die Förderwendelsegmente drehfest mit dem Bohrergrundkörper verbunden. Das heißt, die Förderwendelsegmente können um eine Mittel- oder Symmetrieachse der Bohrvorrichtung herum nicht verdreht werden, jedoch entlang der Längsrichtung der Bohrvorrichtung verschoben werden. Eine formschlüssige Verbindung entsteht durch das Ineinander- oder Hintergreifen von mindestens zwei Verbindungspartnern, in diesem Fall den Förderwendelsegmenten und dem Bohrergrundkörper.

Gemäß einer weiteren Ausführungsform weisen der Bohrergrundkörper einen Eingriffsabschnitt, insbesondere einen Außensechskant, und die Förderwendelsegmente jeweils einen Gegeneingriffsabschnitt, insbesondere einen Innensechskant, auf, der formschlüssig in den Eingriffsabschnitt eingreift.

Alternativ zu dem Außensechskant und dem Innensechskant können auch ein beliebiger Außenvielkant und Innenvielkant, beispielsweise ein Außendreikant oder Außenvierkant und dementsprechend ein Innendreikant oder Innenvierkant, vorgesehen sein. Alternativ kann auch zwischen dem Bohrergrundkörper und den Förderwendelsegmenten jeweils eine Verzahnung als Eingriffsabschnitt und eine entsprechende Gegenverzahnung als Gegeneingriffsabschnitt vorgesehen sein.

Gemäß einer weiteren Ausführungsform weist jedes Förderwendelsegment einen Basisabschnitt, durch den der Bohrergrundkörper hindurchgeführt ist, und einen schraubenförmig um den Basisabschnitt umlaufenden Förderwendelabschnitt auf.

Bevorzugt bilden die Förderwendelabschnitte eine Außenfläche oder Außenkante der Förderwendel aus, die insbesondere eine Umhüllende oder Einhüllende der Förderwendel definiert. Die Einhüllende ist bevorzugt zylinderförmig. Die Außenkante läuft spiralförmig um die Symmetrieachse um.

Gemäß einer weiteren Ausführungsform ist der Basisabschnitt hohlzylinderförmig und weist zwei senkrecht zu einer Symmetrieachse der Bohrvorrichtung orientierte Stirnseiten auf.

Die Stirnseiten oder Stirnflächen bilden insbesondere jeweils eine Grundfläche der hohlzylinderförmigen Geometrie des Basisabschnitts. Der Basisabschnitt ist auf den Bohrergrundkörper, insbesondere auf den Schaft desselben, aufgesteckt oder aufgefädelt.

Gemäß einer weiteren Ausführungsform sind der Basisabschnitt und der Förderwendelabschnitt einteilig, insbesondere materialeinstückig, ausgebildet.

Unter "einteilig" ist insbesondere zu verstehen, dass der Basisabschnitt und der Förderwendelabschnitt ein gemeinsames Bauteil bilden. Unter "materialeinstückig" ist insbesondere zu verstehen, dass der Basisabschnitt und der Förderwendelabschnitt ein einteiliges Bauteil bilden, das durchgehend aus demselben Material gefertigt ist. Vorzugsweise sind die Förderwendelsegmente daher als kostengünstige Kunststoffspritzgussbauteile ausgebildet.

Gemäß einer weiteren Ausführungsform ist eine Steigung der Förderwendel so gewählt, dass der Förderwendelabschnitt einmal um den Basisabschnitt umläuft.

Alternativ kann die Steigung der Förderwendel auch so gewählt werden, dass der Förderwendelabschnitt mehrmals um den Basisabschnitt umläuft.

Gemäß einer weiteren Ausführungsform weisen die Förderwendelsegmente jeweils ein bezüglich einer Radialrichtung der Bohrvorrichtung außen liegendes Metalleinlegeteil auf.

Die Radialrichtung ist senkrecht zu der Symmetrieachse orientiert und weist von dieser weg. Insbesondere definiert das Metalleinlegeteil die zuvor erwähnte, die Förderwendel umhüllende Einhüllende. Das heißt, in der Radialrichtung betrachtet bilden die Metalleinlegeteile der Förderwendel die zuvor erwähnte Außenkante der Förderwendel aus. Die Metalleinlegeteile verhindern einen vorzeitigen Verschleiß der Förderwendel. Die Metalleinlegeteile sind insbesondere an den jeweiligen Förderwendelabschnitten der Förderwendelsegmente vorgesehen.

Gemäß einer weiteren Ausführungsform sind Metalleinlegeteile benachbarter Förderwendelsegmente außer Kontakt.

Hierdurch kann eine Geräuschbildung durch einen Kontakt von Metalleinlegeteilen benachbarter Förderwendelsegmente zuverlässig verhindert werden. Die Außenkante der Förderwendel ist hierdurch insbesondere nicht durchgehend, sondern unterbrochen.

Gemäß einer weiteren Ausführungsform ist das Metalleinlegeteil zumindest teilweise mit Material des jeweiligen Förderwendelsegments umspritzt.

Das heißt, das Metalleinlegeteil ist stoffschlüssig mit dem jeweiligen Förderwendelsegment verbunden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Bevorzugt wird das Metalleinlegeteil in einem Kunststoffspritzgussverfahren mit dem Material des jeweiligen Förderwendelsegments umspritzt. Hierdurch ist eine besonders kostengünstige Herstellung der Förderwendelsegmente möglich. Des Weiteren ist eine besonders hohe Haltbarkeit der Verbindung zwischen dem Metalleinlegeteil und dem Förderwendelsegment gewährleistet.

Gemäß einer weiteren Ausführungsform umfasst die Bohrvorrichtung einen Elastomerring zum Arretieren der Förderwendelsegmente an dem Bohrergrundkörper.

Der Elastomerring kann beispielsweise aus Gummi, einem thermoplastischen Polyurethan oder dergleichen gefertigt sein. Der Elastomerring kann dazu geeignet sein, die Förderwendelsegmente in der Längsrichtung der Bohrvorrichtung betrachtet federvorzuspannen. Hierdurch kann eine Relativbewegung zwischen den Förderwendelsegmenten zuverlässig verhindert werden. Dies verhindert unerwünschten Verschleiß.

Gemäß einer weiteren Ausführungsform sind die Förderwendelsegmente zwischen dem Elastomerring und einem Bohrkopf des Bohrergrundkörpers angeordnet.

Wie zuvor erwähnt, sind die Förderwendelsegmente auf den Schaft des Bohrergrundkörpers aufgefädelt, wobei die Förderwendelsegmente einseitig an dem Bohrkopf und einseitig an dem Elastomerring anliegen.

Gemäß einer weiteren Ausführungsform liegt der Elastomerring an einem um den Bohrergrundkörper umlaufenden Absatz an.

Alternativ kann zwischen dem Absatz und dem Elastomerring auch ein Abstand oder Spalt vorgesehen ein, so dass der Elastomerring nur dann an dem Absatz anliegt, wenn auf die Förderwendel in der Längsrichtung betrachtet eine Kraft aufgebracht wird.

Ferner wird eine Handwerkzeugmaschine mit einer derartigen Bohrvorrichtung vorgeschlagen.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: eine schematische Ansicht einer Ausführungsform einer Bohrvorrichtung;
- Fig. 2: eine schematische Ansicht einer Ausführungsform eines Bohrergrundkörpers für die Bohrvorrichtung gemäß Fig. 1;
- Fig. 3: eine schematische Schnittansicht des Bohrergrundkörpers gemäß der Schnittlinie III-III der Fig. 2;
- Fig. 4: eine schematische Schnittansicht einer Ausführungsform eines Förderwendelsegments für die Bohrvorrichtung gemäß der Schnittlinie IV-IV der Fig. 1; und
- Fig. 5: eine schematische Ansicht einer weiteren Ausführungsform einer Bohrvorrichtung.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

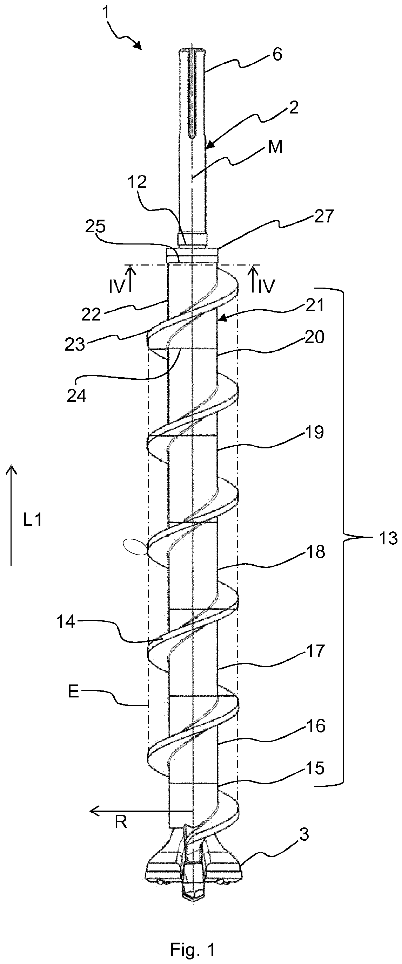

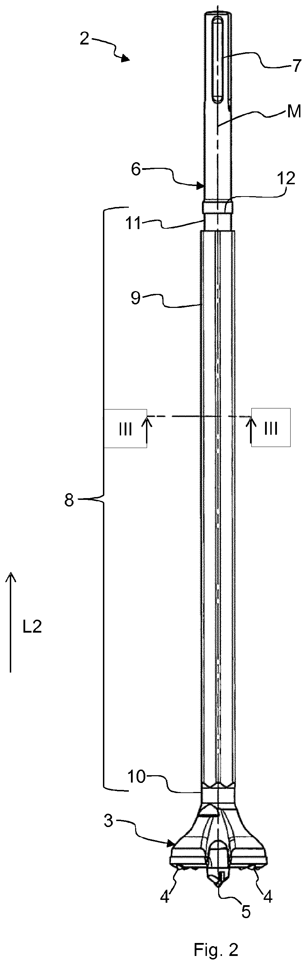

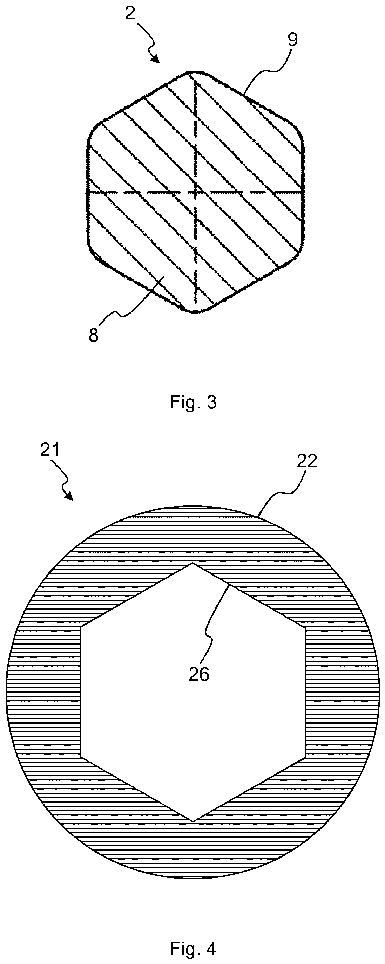

Fig. 1 zeigt eine schematische Ansicht einer Ausführungsform einer Bohrvorrichtung 1. Die Bohrvorrichtung 1 ist ein Glockenbohrer, Gesteinsbohrer oder Hammerbohrer oder kann als solcher bezeichnet werden. Die Bohrvorrichtung 1 umfasst einen in den Fig. 2 und 3 gezeigten Bohrergrundkörper 2. Der Bohrergrundkörper 2 kann auch als Bohrerschaft oder Bohrerrohling bezeichnet werden. Der Bohrergrundkörper 2 ist aus Metall, beispielsweise aus einer Stahllegierung, gefertigt.

Der Bohrergrundkörper 2 umfasst einen Bohrkopf 3 mit Schneidkörpern 4. Die Schneidkörper 4 können beispielsweise ein Hartmetall oder einen Keramikwerkstoff umfassen. Mit Hilfe der Schneidkörper 4 kann ein zu bearbeitender Werkstoff, beispielsweise Gestein oder Beton, abrasiv abgetragen werden. Die Schneidkörper 4 können beispielsweise mit dem Bohrkopf 3 verlötet sein. Ferner umfasst der Bohrkopf 3 einen denselben in einer Längsrichtung L2 des Bohrgrundkörpers 2 überragenden Zentrierbohrer 5. Auch der Zentrierbohrer 5 kann ein Hartmetall oder einen Keramikwerkstoff umfassen.

Der Bohrergrundkörper 2 umfasst weiterhin ein Einsteckende 6, mit dessen Hilfe die Bohrvorrichtung 1 lösbar mit einer Handwerkzeugmaschine verbunden werden kann. Die Handwerkzeugmaschine kann beispielsweise ein Bohrhammer, ein Meißelhammer, ein Kernbohrer oder dergleichen sein. Das Einsteckende 6 umfasst mehrere Mitnahmenuten 7, die einem formschlüssigen Eingriff von Verriegelungselementen der Handwerkzeugmaschine dienen. Eine formschlüssige Verbindung entsteht durch das Ineinander- oder Hintergreifen von mindestens zwei Verbindungspartnern, in diesem Fall den Mitnahmenuten 7 und den Verriegelungselementen.

Zwischen dem Bohrkopf 3 und dem Einsteckende 6 erstreckt sich in der Längsrichtung L2 ein Schaft 8 des Bohrergrundkörpers 2. Der Schaft 8 umfasst einen Eingriffsabschnitt 9. Der Eingriffsabschnitt 9 kann ein Außenvielkant, insbesondere ein Außensechskant (Fig. 3), sein. Der Eingriffsabschnitt 9 ist mit Hilfe eines im Querschnitt bevorzugt kreisrunden Übergangsbereichs 10 mit dem Bohrkopf 3 verbunden.

Zwischen dem Einsteckende 6 und dem Eingriffsabschnitt 9 ist ein im Querschnitt vorzugsweise kreisrunder Eingriffsbereich 11 vorgesehen, der durch einen umlaufenden Absatz 12 von dem Einsteckende 6 abgegrenzt ist. Der Eingriffsabschnitt 9, der Übergangsbereich 10 und der Eingriffsbereich 11 sind Teil des Schafts 8. Der Bohrergrundkörper 2 ist im Wesentlichen rotationssymmetrisch zu einer Mittel- oder Symmetrieachse M aufgebaut. Die Längsrichtung L2 verläuft parallel zu der Symmetrieachse M oder stimmt mit dieser überein.

Nun zurückkehrend zu der Fig. 1 umfasst die Bohrvorrichtung 1 neben dem Bohrergrundkörper 2 eine spiralförmig, schraubenförmig oder helixförmig um den Bohrergrundkörper 2 umlaufende Förderwendel 13. Die Förderwendel 13 ist geeignet, in einer Längsrichtung L1 der Bohrvorrichtung 1 Bohrklein, beispielsweise Gesteinsmehl, von dem Bohrkopf 3 weg in Richtung des Einsteckendes 6 des Bohrergrundkörpers 2 zu fördern. Die Längsrichtung L1 stimmt dabei mit der Längsrichtung L2 überein. Die Längsrichtungen L1, L2 sind dabei in der Orientierung der Fig. 1 und 2 von unten nach oben, das heißt, von dem Bohrkopf 3 in Richtung des Einsteckendes 6 orientiert. Auch die Bohrvorrichtung 1 ist im Wesentlichen rotationssymmetrisch zu der Symmetrieachse M aufgebaut. Die Förderwendel 13 kann auch als Förderhelix, Förderspirale oder Förderschraube bezeichnet werden.

Der Förderwendel 13 ist eine Umhüllende oder Einhüllende E zugeordnet. Die Einhüllende E ist zylinderförmig mit einer kreisrunden Basisfläche. Die Einhüllende E ist definiert durch eine in einer Radialrichtung R von der Symmetrieachse M beabstandet angeordnete und spiralförmig um die Symmetrieachse M umlaufende Außenfläche oder Außenkante 14 der Förderwendel 13. Die Radialrichtung R ist dabei senkrecht zu der Symmetrieachse M und von dieser weg orientiert.

Die Förderwendel 13 ist in eine Vielzahl nebeneinander angeordneter Förderwendelsegmente 15 bis 21 unterteilt. Die Anzahl der Förderwendelsegnete 15 bis 21 ist beliebig. Insbesondere sind jedoch zumindest zwei derartige Förderwendelsegmente 15 bis 21 vorgesehen. Die Fig. 1 zeigt sieben Förderwendelsegmente 15 bis 21, die auf den Schaft 8 des Bohrergrundkörpers 2 aufgefädelt sind. Die Förderwendelsegmente 15 bis 21 sind lose nebeneinander angeordnet. Das heißt, die Förderwendelsegmente 15 bis 21 sind nicht miteinander verbunden und sind als voneinander getrennte Bauteile ausgebildet. Dies ermöglicht den Austausch einzelner Förderwendelsegmente 15 bis 21. Die Förderwendelsegmente 15 bis 21 können in der Längsrichtung L1 betrachtet unterschiedlich lang oder gleich lang sein.

Die Förderwendel 13, und insbesondere die einzelnen Förderwendelsegmente 15 bis 21, sind bevorzugt aus einem Kunststoffmaterial gefertigt. Beispielsweise können die Förderwendelsegmente 15 bis 21 aus Polyethylen (PE), Polypropylen (PP), Polytetrafluorethylen (PTFE) oder jedem anderen geeigneten Kunststoffmaterial gefertigt sein. Das Kunststoffmaterial ist insbesondere ein Thermoplast. Beispielsweise können die Förderwendelsegmente 15 bis 21 kostengünstige Kunststoffspritzgussbauteile sein. Die Förderwendel 13 kann auch als Kunststoffförderwendel bezeichnet werden.

Jedes Förderwendelsegment 15 bis 21 weist, wie anhand des Förderwendelsegments 21 gezeigt, einen auf den Bohrergrundkörper 2, insbesondere auf den Eingriffsabschnitt 9 des Schafts 8, aufgesteckten rohrförmigen Basisabschnitt 22 und einen schraubenförmig um den Basisabschnitt 22 umlaufenden Förderwendelabschnitt 23 auf. Die Förderwendelabschnitte 23 aller Förderwendelsegmente 15 bis 21 bilden so die um den Bohrergrundkörper 2 umlaufende Förderwendel 13 mit der Außenkante 14. Auch die Basisabschnitte 22 sind Teil der Förderwendel 13.

Der Basisabschnitt 22 und der Förderwendelabschnitt 23 jedes Förderwendelsegments 15 bis 21 sind vorzugsweise einteilig, insbesondere materialeinstückig, ausgebildet. Beispielsweise können die Förderwendelsegmente 15 bis 21, wie zuvor erwähnt, kostengünstige Kunststoffspritzgussbauteile sein. Der Basisabschnitt 22 ist hohlzylinderförmig und umfasst zwei parallel zueinander und senkrecht zu der Symmetrieachse M orientierte Stirnflächen oder Stirnseiten 24, 25. Die Stirnseiten 24, 25 sind ringförmig und bilden eine Grundfläche der hohlzylinderförmigen Geometrie des Basisabschnitts 22.

Eine Steigung, insbesondere eine Gewindesteigung, der Förderwendel 13 ist dabei so gewählt, dass der jeweilige Förderwendelabschnitt 23 jedes Förderwendelsegments 15 bis 21 einmal um den ihm zugeordneten Basisabschnitt 22 umläuft. Alternativ kann die Steigung auch so gewählt werden, dass der Förderwendelabschnitt 23 mehrmals, beispielsweise zweimal oder dreimal, um den Basisabschnitt 22 umläuft.

Wie zuvor erwähnt, sind die Förderwendelsegmente 15 bis 21 untereinander nicht verbunden. Die Förderwendelsegmente 15 bis 21 sind allerdings formschlüssig mit dem Bohrergrundkörper 2 derart verbunden, dass die Förderwendelsegmente 15 bis 21 drehfest an dem Bohrergrundkörper 2 festgelegt sind. Wie zuvor erwähnt, weist der Bohrergrundkörper 2 den in den Fig. 2 und 3 gezeigten Eingriffsabschnitt 9 auf. Dementsprechend weisen die Basisabschnitte 22 der Förderwendelsegmente 15 bis 21 einen zu dem Eingriffsabschnitt 9 korrespondierenden Gegeneingriffsabschnitt 26 (Fig. 4) auf. Der Gegeneingriffsabschnitt 26 kann, wie in der Fig. 4 gezeigt, ein zu dem Eingriffsabschnitt 9 korrespondierender Innenvielkant, insbesondere ein Innensechskant, sein.

Wie die Fig. 1 zeigt, sind die Förderwendelsegmente 15 bis 21 auf den Bohrergrundkörper 2 derart aufgefädelt, dass ein erstes Förderwendelsegment 15 an dem Bohrkopf 3 anliegt. Auf das erste Förderwendelsegment 15 folgen ein zweites bis siebtes Förderwendelsegment 16 bis 21. Das siebte Förderwendelsegment 21 wiederum ist mit Hilfe eines Elastomerrings 27 gegenüber dem Absatz 12 des Bohrergrundkörpers 2 festgelegt. Der Elastomerring 27 greift dabei in den Eingriffsbereich 11 ein. Somit sind die Förderwendelsegmente 15 bis 21 in der Längsrichtung L1 betrachtet zwischen dem Bohrkopf 3 und dem Elastomerring 27 axial festgelegt. Eine Verdrehsicherung der Förderwellensegmente 15 bis 21 ist mit Hilfe des zuvor erwähnten Eingriffsabschnitts 9 und des korrespondierenden Gegeneingriffsabschnitts 26 gewährleistet.

Nach einem Entfernen des Elastomerrings 27 können die Förderwendelsegmente 15 bis 21 einfach von dem Bohrergrundkörper 2 abgezogen werden. Der Elastomerring 27 kann stets an dem Absatz 12 anliegen oder nur dann, wenn auf die Förderwendel 13 eine in der Längsrichtung L1 wirkende Kraft aufgebracht wird. In diesem Fall kann zwischen dem Absatz 12 und dem Elastomerring 27 ein Spalt vorgesehen sein.

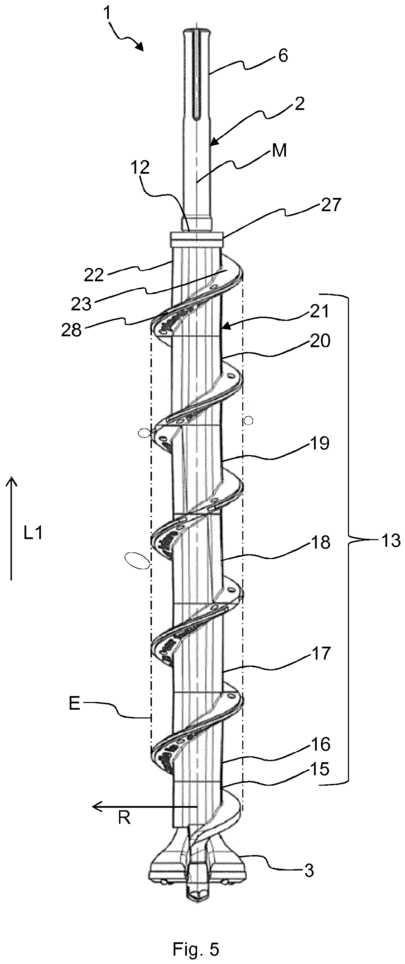

Fig. 5 zeigt eine weitere Ausführungsform einer Bohrvorrichtung 1. Die Bohrvorrichtung 1 gemäß der Fig. 5 unterscheidet sich von der Bohrvorrichtung 1 gemäß der Fig. 1 im Wesentlichen nur dadurch, dass die Förderwendelabschnitte 23 der Förderwendelsegmente 15 bis 21 jeweils ein von dem jeweiligen Basisabschnitt 22 wegweisendes Metallband oder Metalleinlegeteil 28 aufweisen. Das Metalleinlegeteil 28 ist beispielsweise als Stahlband ausgebildet.

In der Radialrichtung R betrachtet liegt das Metalleinlegeteil 28 jeweils an einem äußersten umfänglichen Rand des jeweiligen Förderwendelabschnitts 23 der Förderwendelsegmente 15 bis 21. Die zuvor erwähnte Einhüllende E wird somit durch die Metalleinlegeteile 28 der Förderwendel 13 definiert. Die in der Fig. 5 nicht mit einem Bezugszeichen versehene Außenkante 14 wird mit Hilfe der Metalleinlegeteile 28 gebildet. Dabei kontaktieren Metalleinlegeteile 28 benachbarter Förderwendelsegmente 15 bis 21, beispielsweise der Förderwendelsegmente 15 und 16, einander nicht, wodurch die Außenkante 14 nicht durchgehend, sondern unterbrochen ist. Hierdurch kann eine Geräuschbildung durch einen Kontakt benachbarter Metalleinlegeteile 28 vermieden werden. Mit Hilfe der Metalleinlegeteile 28 kann ein reduzierter Verschleiß der Förderwendel 13 erreicht werden.

Beide zuvor erläuterten Ausführungsformen der Bohrvorrichtung 1 weisen die nachfolgend aufgeführten Vorteile auf. Dadurch, dass die Förderwendelsegmente 15 bis 21 aus einem Kunststoffmaterial gefertigt sind, kann im Vergleich zu einer Bohrvorrichtung mit einer Förderwendel aus einem Metallwerkstoff eine signifikante Reduzierung der Lärmbelastung erreicht werden. Des Weiteren kann aufgrund der Verwendung des Kunststoffmaterials eine Gewichtsreduktion der Bohrvorrichtung 1 erzielt werden. Eine Erwärmung des Einsteckendes 6 wird aufgrund der im Vergleich zu einem Metall reduzierten Wärmeleitfähigkeit des Kunststoffmaterials reduziert.

Aufgrund des formschlüssigen Eingriffs des Gegeneingriffsabschnitts 26 in den Eingriffsabschnitt 9 ist eine einfache Verriegelung und Montage der Förderwendelsegmente 15 bis 21 möglich. Des Weiteren können einzelne Förderwellensegmente 15 bis 21, beispielsweise bei Verschleiß, einfach und schnell ausgetauscht werden. Mit Hilfe des Elastomerrings 27 ist eine einfache Verriegelung der Förderwendelsegmente 15 bis 21 auf dem Bohrergrundkörper 2 in axialer Richtung, das heißt, in der Längsrichtung L1, möglich.

### BEZUGSZEICHENLISTE

- 1: Bohrvorrichtung
- 2: Bohrergrundkörper
- 3: Bohrkopf
- 4: Schneidkörper
- 5: Zentrierbohrer
- 6: Einsteckende
- 7: Mitnahmenut
- 8: Schaft
- 9: Eingriffsabschnitt
- 10: Übergangsbereich
- 11: Eingriffsbereich
- 12: Absatz
- 13: Förderwendel
- 14: Außenkante
- 15: Förderwendelsegment
- 16: Förderwendelsegment
- 17: Förderwendelsegment
- 18: Förderwendelsegment
- 19: Förderwendelsegment
- 20: Förderwendelsegment
- 21: Förderwendelsegment
- 22: Basisabschnitt
- 23: Förderwendelabschnitt
- 24: Stirnseite
- 25: Stirnseite
- 26: Gegeneingriffsabschnitt
- 27: Elastomerring
- 28: Metalleinlegeteil

- E: Einhüllende
- L1: Längsrichtung
- L2: Längsrichtung
- M: Symmetrieachse
- R: Radialrichtung

## Patentansprüche

1. Bohrvorrichtung (1), insbesondere Glockenbohrer, mit einem Bohrergrundkörper (2) und einer schraubenförmig um den Bohrergrundkörper (2) umlaufenden Förderwendel (13), wobei die Förderwendel (13) in eine Vielzahl nebeneinander angeordneter Förderwendelsegmente (15 - 21) unterteilt ist.

2. Bohrvorrichtung nach Anspruch 1, **dadurch gekennzeichnet, dass** die Förderwendelsegmente (15 - 21) lose nebeneinander angeordnet sind.

3. Bohrvorrichtung nach Anspruch 1 oder 2, **dadurch gekennzeichnet, dass** die Förderwendel (13) aus einem Kunststoffmaterial gefertigt ist.

4. Bohrvorrichtung nach einem der Ansprüche 1 - 3, **dadurch gekennzeichnet, dass** die Förderwendelsegmente (15 - 21) formschlüssig mit dem Bohrergrundkörper (2) verbunden sind.

5. Bohrvorrichtung nach Anspruch 4, **dadurch gekennzeichnet, dass** der Bohrergrundkörper (2) einen Eingriffsabschnitt (9), insbesondere einen Außensechskant, und die Förderwendelsegmente (15 - 21) jeweils einen Gegeneingriffsabschnitt (26), insbesondere einen Innensechskant, aufweisen, der formschlüssig in den Eingriffsabschnitt (9) eingreift.

6. Bohrvorrichtung nach einem der Ansprüche 1 - 5, **dadurch gekennzeichnet, dass** jedes Förderwendelsegment (15 - 21) einen Basisabschnitt (22), durch den der Bohrergrundkörper (2) hindurchgeführt ist, und einen schraubenförmig um den Basisabschnitt (22) umlaufenden Förderwendelabschnitt (23) aufweist.

7. Bohrvorrichtung nach Anspruch 6, **dadurch gekennzeichnet, dass** der Basisabschnitt (22) hohlzylinderförmig ist und zwei senkrecht zu einer Symmetrieachse (M) der Bohrvorrichtung (1) orientierte Stirnseiten (24, 25) aufweist.

8. Bohrvorrichtung nach Anspruch 6 oder 7, **dadurch gekennzeichnet, dass** der Basisabschnitt (22) und der Förderwendelabschnitt (23) einteilig, insbesondere materialeinstückig, ausgebildet sind.

9. Bohrvorrichtung nach einem der Ansprüche 6 - 8, **dadurch gekennzeichnet, dass** eine Steigung der Förderwendel (13) so gewählt ist, dass der Förderwendelabschnitt (23) einmal um den Basisabschnitt (22) umläuft.

10. Bohrvorrichtung nach einem der Ansprüche 1 - 9, **dadurch gekennzeichnet, dass** die Förderwendelsegmente (15 - 21) jeweils ein bezüglich einer Radialrichtung (R) der Bohrvorrichtung (1) außenliegendes Metalleinlegeteil (28) aufweisen.

11. Bohrvorrichtung nach Anspruch 10, **dadurch gekennzeichnet, dass** Metalleinlegeteile (28) benachbarter Förderwendelsegmente (15 - 21) außer Kontakt sind.

12. Bohrvorrichtung nach Anspruch 10 oder 11, **dadurch gekennzeichnet, dass** das Metalleinlegeteil (28) zumindest teilweise mit Material des jeweiligen Förderwendelsegments (15 - 21) umspritzt ist.

13. Bohrvorrichtung nach einem der Ansprüche 1 - 12, **gekennzeichnet durch** einen Elastomerring (27) zum Arretieren der Förderwendelsegmente (15 - 21) an dem Bohrergrundkörper (2).

14. Bohrvorrichtung nach Anspruch 13, **dadurch gekennzeichnet, dass** die Förderwendelsegmente (15 - 21) zwischen dem Elastomerring (27) und einem Bohrkopf (3) des Bohrergrundkörpers (2) angeordnet sind.

15. Bohrvorrichtung nach Anspruch 13 oder 14, **dadurch gekennzeichnet, dass** der Elastomerring (27) an einem um den Bohrergrundkörper (2) umlaufenden Absatz (12) anliegt.
